# EUROPÄISCHE PATENTSCHRIFT

(11) **EP 0 355 662 B1**
(45) Veröffentlichungstag und Bekanntmachung des Hinweises auf die Patenterteilung: **01.06.1994**
(21) Anmeldenummer: 89115024.5
(22) Anmeldetag: 14.08.1989
(51) Int. Cl.: F16L 53/00

(54) **Aktiv gekühlter Wärmeschutzschild**
Actively cooled shield for heat protection
Paroi pour la protection contre la chaleur refroidie activement

(30) Priorität: 25.08.1988 DE 3828902
(43) Veröffentlichungstag der Anmeldung: 28.02.1990
(73) Patentinhaber: MUKHERJEE, Samar Bandhu, 80805 München (DE)
(72) Erfinder: MUKHERJEE, Samar Bandhu, 80805 München (DE)
(74) Vertreter: von Bezold, Dieter, Dr.

(56) Entgegenhaltungen:
- DE-A- 3 416 843
- DE-C- 861 537
- GB-A- 1 018 157
- US-A- 4 235 279

## Beschreibung

Die Erfindung geht aus von einem aktiv gekühlten Wärmeschutzschild mit Kühlrohren, die an ein Kühlmittelsystem anschließbar sind, und mit Schutzelement-Körpern, die aus hochwarmfestem Material bestehen und mit einem Teil ihrer Oberfläche jeweils eine nutartige Ausnehmung zur Aufnahme eines Kühlrohres bilden wie er aus der DE-A-34 16 843 bekannt ist.

Bei diesem bekannten Wärmeschutzschild sind die Kühlrohre in die nutartigen Ausnehmungen der Schutzelement-Körper, die aus Graphit bestehen können, hart eingelötet.

Aus der US-A-4,235,279 ist eine Stranggießkokille für Metalle bekannt, die aus einem Graphitblock besteht, dessen Außenfläche Nuten zur Aufnahme von Kühlrohren aufweist. Die Nuten haben einen halbkreisförmigen Querschnitt. Die Kühlrohre sind nachgiebig in die Nuten gedrückt.

Die vorliegende Erfindung löst, ausgehend von dem oben genannten Stand der Technik, durch die kennzeichnenden Merkmale des Anspruchs 1 die Aufgabe, einen gattungsgemäßen Wärmeschutzschild dahingehend weiterzubilden, daß er einfacher sowie billiger in der Herstellung ist, ein leichteres Auswechseln beschädigter Schutzelementkörper ermöglicht und thermischen Wechselbeanspruchungen besser standzuhalten vermag.

Weiterbildungen und vorteilhafte Ausgestaltungen des erfindungsgemäßen Wärmeschutzschildes sind Gegenstand von Unteransprüchen.

Der erfindungsgemäße Wärmeschutzschild läßt sich einfach und preiswert herstellen. Beschädigte Schutzelement-Körper lassen sich leicht auswechseln, da man sie einfach auf die Kühlrohre aufschieben kann. Das zangenartige Umschließen des Kühlrohres durch den relativ massiven, im allgemeinen prismatischen Körper bewirkt, daß der Kraftschluß zwischen dem Kühlrohr und dem Körper bei einer Erwärmung der dem Kühlrohr abgewandten Seite des Körpers fester wird ("Klemmeffekt"), andererseits können Kühlrohr- und Schutzelementkörper in Längsrichtung des Kühlrohres in Bezug aufeinander gleiten, so daß bei Temperaturänderungen keine nennenswerten axialen Spannungen auftreten können. Der Formschluß mit dem Kühlrohr bewirkt außerdem eine mechanische Entlastung der kritischen Zone des Schutzelement-Körpers angrenzend an die das Kühlrohr enthaltende Ausnehmung. Dies ist besonders vorteilhaft, wenn die Schutzelementkörper in bevorzugter Weise aus Graphit bestehen, da der Graphit bei dem vorliegenden Wärmeschutzschild in erster Linie Druckbelastungen, dagegen nur reduzierten Zugbelastungen, denen er schlechter standzuhalten vermag, ausgesetzt wird.

Im folgenden wird ein bevorzugtes Ausführungsbeispiel der Erfindung unter Bezugnahme auf die Zeichnungen näher erläutert. Es zeigen:
- Fig. 1: eine Querschnittsansicht einer zu schützenden Wand, die mit einem Wärmeschutzschild gemäß einer bevorzugten Ausführungsform der Erfindung versehen ist, und
- Fig. 2: eine isometrische Darstellung der mit dem erfindungsgemäßen Wärmeschutzschild versehenen Wand.

Der Wärmeschutzschild gemäß der Erfindung ist vor allem für plasmaphysikalische Anlagen, wie Fusionsreaktoren und dergleichen, von Nutzen und soll daher im folgenden anhand dieses bevorzugten Anwendungsgebietes beschrieben werden.

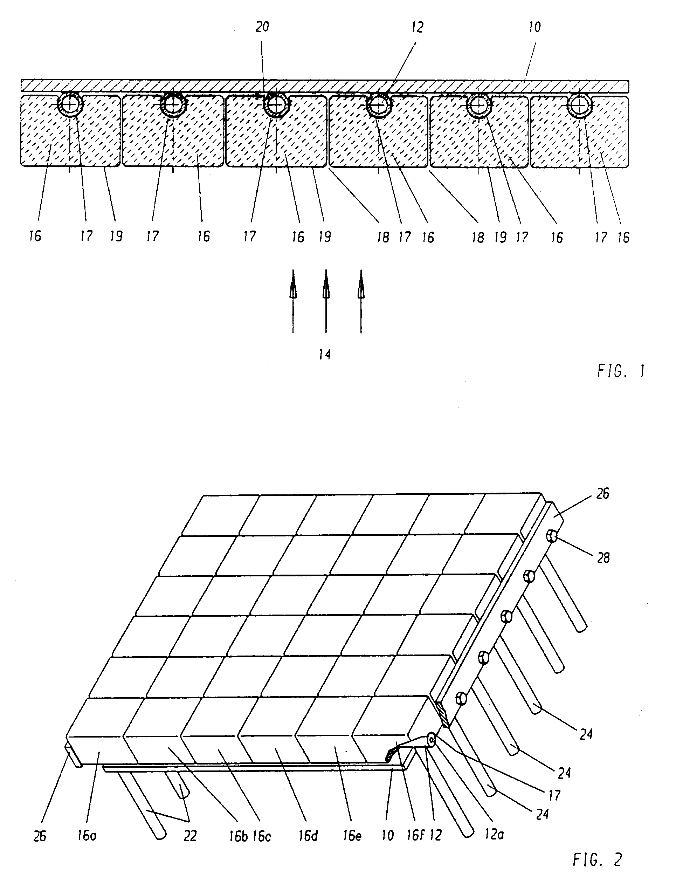

Fig. 1 zeigt eine gegen übermäßige Wärmeeinwirkung zu schützende Wand 10, welche beispielsweise die sogenannte Erste Wand eines Fusionsreaktors oder die Innenwand des Vakuumgefäßes eines Fusionsexperimentes oder eine Trägerstruktur eines Limiters bilden kann Dieses schützende System kann auch als Wärmekollektor dienen. Auf die Wand 10 ist eine Anzahl von Kühlrohren 12 aus Metall (z. B. Stahl oder Kupfer), die mit Abständen parallel zueinander verlaufen, hart aufgelötet oder geschweißt. Diese Verbindung nimmt einen Winkelbereich von etwa 90° auf der Seite der Kühlrohre 12 ein, die der Richtung eines von der Wand 10 abzuhaltenden Wärmeflusses 14 abgewandt ist. Der Wärmefluß kann beispielsweise aus einer nicht dargestellten Plasmaentladung kommen.

Auf jedem Kühlrohr 12 ist eine Mehrzahl von Schutzelementkörpern 16 aus z. B. Graphit kraft- und formschlüssig angeordnet, sie können aneinander anliegen oder jeweils durch einen Zwischenraum getrennt sein. Zwischen den Körpern 16, die auf zwei benachbarten Kühlrohren 12 angeordnet sind, ist ein spaltförmiger Zwischenraum 18 vorgesehen.

Die Körper 16 haben auf ihrer dem Wärmefluß 14 zugewandten Seite eine freiliegende Oberfläche 19, die bei dem dargestellten Ausführungsbeispiel der Erfindung im wesentlichen quadratisch ist, und auf der dem Wärmefluß abgewandten Seite jeweils eine Ausnehmung 20, deren Wand das zugehörige Kühlrohr 12 in einem Umfangsbereich von etwa 270 Grad eng umschließt. Die Körper 16 sind auf das zugehörige Kühlrohr 12 nur aufgeschoben, d. h. nur form- und kraftschlüssig mit dem Kühlrohr verbunden, sie bilden also mit dem Kühlrohr einen Schiebesitz mit Reibungsschluß.

Zweckmäßigerweise kann, je nach Optimierung, die Dicke der Schutzelementkörper von der Mitte der Ausnehmung bis zur Oberfläche 19 wesentlich größer als Durchmesser der Ausnehmung sein, z. B mindestens doppelt so groß. Die Schutzelementkörper sind zweckmäßigerweise relativ massiv, d. h. ihre kleinste Querschnittsabmessung kann, je nach Optimierung, ein Mehrfaches des Durchmessers der Kühlrohre betragen.

Zwischen der Wand der Ausnehmung 20 und dem Kühlrohr 12 ist eine gut wärmeleitende Zwischenlage 17 aus geeignetem Material, z. B. Gewebe oder Filz aus Kohlefaser, Paste u. dgl. angeordnet. Hierdurch können der Wärmewiderstand weiter reduziert und ein Toleranzausgleich zwischen Ausnehmung 20 und Kühlrohr 12 erreicht werden.

Wenn im Betrieb die dem Wärmefluß 14 zugewandte Oberfläche 19 der Körper erwärmt wird, dehnt sich der den Kühlrohren 12 abgewandte Teil der Körper etwas aus, so daß der zangenartige Kraftschluß zwischen dem Körper und dem zugehörigen Kühlrohr stärker und der Wärmewiderstand am Ubergang zwischen Körper 16 und Kühlrohr 12 entsprechend verringert wird. Schubspannungen in Graphit, die bei einer Hartlotverbindung zwischen den Kühlrohren und den Schutzelement-Körpern auftreten können, werden hier vermieden, da das Schutzelement 16 relativ ungehindert auf dem Kühlrohr 12 gleiten kann.

Fig. 2 zeigt beispielsweise, wie eine großflächige Abdeckung aufgebaut sein kann. Auf die zu schützende Wand 10 sind wieder Kühlrohre 12 ... hart aufgelötet oder aufgeschweißt. Die Kühlrohre 12 sind kurz vor ihren Enden jeweils mit einem Zuleitungsrohr 22 und einem Ableitungsrohr 24 verbunden und mit diesen im Betrieb mit einem nicht dargestellten Kühlmittelsystem verbunden. Auf jedes Kühlrohr sind bei diesem Beispiel sechs quaderförmige, in Draufsicht quadratische Graphitkörper 16a bis 16f kraft- und formschlüssig aufgeschoben. Die über die Zu- und Ableitungen 22, 24 überstehenden Enden 12a der Kühlrohre sind mit einem Innengewinde versehen, so daß an ihnen Endplatten 26 durch Schraubenbolzen 28 befestigt werden können, die Enden der Kühlrohre verschließen und die Schutzelementkörper 16 in Axialrichtung mit einem gewissen Spiel auf den zugehörigen Kühlrohren fixieren. In Umfangsrichtung der Kühlrohre kann die Lage der Schutzelementkörper durch an der Wand 10 angebrachte Federn (nicht dargestellt) fixiert werden.

Das oben beschriebene Ausführungsbeispiel läßt sich in der verschiedensten Weise abwandeln, ohne den Rahmen der Erfindung zu überschreiten. Auf einem Kühlrohr oder Kühlrohrabschnitt kann nur ein einziger, entsprechend lang bemessener Kühlelementkörper vorgesehen sein. Der Umfangsbereich, in dem die Wand der Ausnehmung 20 das zugehörige Kühlrohr 12 umschließt, kann anders bemessen sein. Der Umschließungswinkel soll größer als 180 Grad und kleiner als 360 Grad sein und liegt zweckmäßigerweise zwischen etwa 210 Grad und 300 Grad Die Kühlelementkörper können eine andere Querschnittsform als beschrieben und dargestellt haben, ihre kleinste Querschnittsabmessung ist jedoch vorzugsweise größer (z. B. mindestens das 1,5-fache) als der Durchmesser des zugehörigen Kühlrohres. Die Zwischenlage 17 kann aus einem Gewebe oder Filz aus Kohlefasern, aus Wärmeleitpaste oder einem anderen geeigneten Material bestehen oder ganz entfallen. Die Kühlelementkörper können aus anderen ausreichend hitzebeständigen Materialien als Graphit bestehen, z. B. aus einer Keramik. Der Zwischenraum 18 zwischen benachbarten Körpern kann auch die Form eines schräg verlaufenden oder geknickten Spaltes haben, so daß keine direkte Sichtverbindung zwischen der den Wärmefluß 14 erzeugenden Wärmequelle und der zu schützenden Wand 10 besteht. Die Kühlrohre 12 brauchen nicht gerade zu sein, die Erfindung läßt sich vielmehr auch bei gebogenen Kühlrohren anwenden, wobei man dann den Ausnehmungen 20 einen entsprechenden Verlauf gibt oder, falls die Biegung nicht zu stark ist, in Längsrichtung jedes Rohres mehrere, relativ kurze Schutzelementkörper angeordnet. Die Montage durch Aufschieben auf die fertig montierten Kühlrohre 12 ermöglicht die Ausführung großflächiger Abdeckungen bei geringen Kosten.

## Patentansprüche

1. Aktiv gekühlter Wärmeschutzschild mit Kühlrohren und mit Schutzelementkörpern (16), die aus hochwarmfestem Material bestehen und mit einem Teil ihrer Oberfläche jeweils eine nutartige Ausnehmung (20) zur Aufnahme eines Kühlrohres (12) bilden, **dadurch gekennzeichnet**, daß der die Ausnehmung (20) bildende Wandteil das betreffende Kühlrohr (12) in einem Umfangsbereich von mehr als 180 Grad und weniger als 360 Grad zangenartig umschließt und daß die Schutzelementkörper (16) ausschließlich form- und kraftschlüssig mit dem zugehörigen Kühlrohr (12) verbunden sind.

2. Wärmeschutzschild nach Anspruch 1, **dadurch gekennzeichnet**, daß der die Ausnehmung (20) bildende Wandteil das zugehörige Kühlrohr (12) in einem Winkelbereich von 210 bis 300 Grad umschließt.

3. Wärmeschutzschild nach Anspruch 1, **dadurch gekennzeichnet**, daß der die Ausnehmung (20) bildende Wandteil das zugehörige Kühlrohr (12) in einem Winkelbereich von etwa 270 Grad umschließt.

4. Wärmeschutzschild nach einem der Ansprüche 1 bis 3, **dadurch gekennzeichnet**, daß die Kühlrohre (12) mit einer zu schützenden Oberfläche (Wand 10) hart verlötet oder verschweißt sind.

5. Wärmeschutzschild nach einem der vorhergehenden Ansprüche, **dadurch gekennzeichnet**, daß der Abstand benachbarter Kühlrohre (12) und die Abmessungen der Schutzelement-Körper (16) so bemessen sind, daß zwischen den auf den benachbarten Kühlrohren angeordneten Schutzelementkörpern ein Zwischenraum (18) verbleibt.

6. Wärmeschutzschild nach einem der vorhergehenden Ansprüche, **dadurch gekennzeichnet**, daß auf den Kühlrohren (12) jeweils mehrere, im Vergleich zur Länge des zugehörigen Kühlrohres (12) verhältnismäßig kurze Schutzelement-Körper (16a, 16b...) angeordnet sind.

7. Wärmeschutzschild nach Anspruch 6, **dadurch gekennzeichnet**, daß die Schutzelement-Körper (16) in Draufsicht etwa quadratisch sind.

8. Wärmeschutzschild nach einem der vorhergehenden Ansprüche, **dadurch gekennzeichnet**, daß die Schutzelementkörper (16) aus hochtemperaturbeständigem Werkstoff, wie Graphit oder einer Keramik bestehen.

9. Wärmeschutzschild nach einem der vorhergehenden Ansprüche, **dadurch gekennzeichnet**, daß die Dicke der Schutzelementkörper von der Mitte der Ausnehmung bis zu der der Wärmequelle zugewandten Oberfläche (19) größer als der Durchmesser der Ausnehmung (20) ist.

10. Wärmeschutzschild nach einem der vorhergehenden Ansprüche, **dadurch gekennzeichnet**, daß die kleinste Querschnittsabmessung der Schutzelementkörper größer als der Durchmesser der Kühlrohre (12) ist.

## Claims

1. Actively cooled shield for heat protection with cooling tubes and with protective bodies (16), which consist of highly heat-resistant material and form with a part of their surface a groove-like recess (20) for reception of a cooling tube (12), characterized in that the wall part forming the recess (20) surrounds the associated cooling tube (12) over a peripheral region of more than 180 degrees and less than 360 degrees like pincers and in that the protective bodies (16) are connected to the associated cooling tubes (12) solely by interlocking and frictional engagement.

2. Shield for heat protection according to claim 1, characterized in that the wall part forming the recess (20) surrounds the associated cooling tube (12) over an angular range of 210 to 300 degrees.

3. Shield for heat protection according to claim 1, characterized in that the wall part forming the recess (20) surrounds the associated cooling tube (12) over an angular range of about 270 degrees.

4. Shield for heat protection according to one of claims 1 to 3, characterized in that the cooling tubes (12) are hard-soldered or welded to a protective surface (wall 10).

5. Shield for heat protection according to one of the preceding claims, characterized in that the spacing of adjacent cooling tubes (12) and the dimensions of the protective bodies (16) are such that a gap (18) remains between the protective bodies (16) arranged on the adjacent cooling tubes.

6. Shield for heat protection according to one of the preceding claims, characterized in that a plurality of protective bodies (16a, 16b...), which are relatively short in comparison with the length of the associated cooling tubes (12), are arranged on each of the cooling tubes (12).

7. Shield for heat protection according to claim 6, characterized in that the protective bodies (16) are approximately square in plan.

8. Shield for heat protection according to one of the preceding claims, characterized in that the protective bodies (16) consist of a high-temperature-resistant material, such as graphite or a ceramic.

9. Shield for heat protection according to one of the preceding claims, characterized in that the thickness of the protective bodies (16) from the middle of the recess to the surface (19) facing the source of heat is greater then the diameter of the recess (20).

10. Shield for heat protection according to one of the preceding claims, characterized in that the smallest cross-sectional dimension of the protective body is greater than the diameter of the cooling tubes (12).

## Revendications

1. Bouclier de protection thermique à refroidissement actif, comportant des tubes de refroidissement et des corps (16) d'éléments de protection, composés de matériaux résistants aux hautes températures et qui forment, avec une partie de leur surface, chaque fois un évidement (20) en forme de rainure servant à recevoir un tube de refroidissement (12), caractérisé en ce que la partie de paroi formant l'évidement (20) entoure à la manière d'une pince le tube de refroidissement (12) concerné sur une partie de circonférence supérieure à 180 degrés et inférieure à 360 degrés et en ce que les corps d'éléments de protection (16) sont reliés au tube de refroidissement (12) correspondant, exclusivement par ajustement de forme et à force.

2. Bouclier de protection thermique selon la revendication 1, caractérisé en ce que la partie de paroi (20) formant l'évidement entoure le tube de refroidissement (12) correspondant sur une partie de circonférence allant de 210 à 300 degrés.

3. Bouclier de protection thermique selon la revendication 1, caractérisé en ce que la partie de paroi (20) formant l'évidement entoure le tube de refroidissement (12) correspondant sur une partie de circonférence d'à peu près 270 degrés.

4. Bouclier de protection thermique selon l'une des revendications 1 à 3, caractérisé en ce que les tubes de refroidissement (12) sont reliés par une brasure forte ou soudés à une surface à protéger (paroi 10).

5. Bouclier de protection thermique selon l'une des revendications précédentes, caractérisé en ce que la distance entre deux tubes de refroidissement (12) voisins et les dimensions des corps (16) d'éléments de protection sont telles qu'il subsiste un espace intermédiaire (18) entre les corps d'éléments de protection disposés sur les tubes voisins.

6. Bouclier de protection thermique selon l'une des revendications précédentes, caractérisé en ce que plusieurs corps (16a,16b...) d'éléments de protection, relativement courts par rapport à la longueur du tube de refroidissement (12) correspondant, sont chaque fois disposés sur les tubes de refroidissement (12).

7. Bouclier de protection thermique selon la revendication 6, caractérisé en ce que les corps (16) d'éléments de protection sont à peu près carrés en vue de dessus.

8. Bouclier de protection thermique selon l'une des revendications précédentes, caractérisé en ce que les corps (16) d'éléments de protection se composent d'un matériau résistant aux hautes températures, comme le graphite ou une céramique.

9. Bouclier de protection thermique selon l'une des revendications précédentes, caractérisé en ce que l'épaisseur, mesurée entre le centre de l'évidement et la surface (19) tournée vers la source de chaleur, des corps d'éléments de protection est supérieure au diamètre de l'évidement (20).

10. Bouclier de protection thermique selon l'une des revendications précédentes, caractérisé en ce que la plus faible dimension de section transversale des corps d'éléments de protection est supérieure au diamètre des tubes de refroidissement (12).
